# EUROPEAN PATENT SPECIFICATION

(11) **EP 1 653 543 B1**
(45) Date of publication and mention of the grant of the patent: **20.10.2010**
(21) Application number: 05254893.0
(22) Date of filing: 05.08.2005
(51) Int. Cl.: H01M 8/02, H01M 8/04

(54) **Flow field design for high fuel utilization fuel cells**
Strömungsfeldplattenentwurf für Brennstoffzellen mit hoher Brennstoffverwendungsfähigkeit
Conception de champ d'écoulement pour pile à combustible à utilisation élevée de combustible

(30) Priority: 02.11.2004 US 978474
(43) Date of publication of application: 03.05.2006
(73) Proprietor: GENERAL ELECTRIC COMPANY, Schenectady, NY 12345 (US)
(72) Inventor: Issacci, Farrokh, Playa del Rey, CA 90203 (US); Guan, Jie, Torrance, CA 90503 (US); Ong, Estela T., Chicago, Illinois 60616 (US)
(74) Representative: Pedder, James Cuthbert

(56) References cited:
- EP-A- 0 924 785
- WO-A-02/069426
- US-A- 5 686 199
- US-A1- 2004 038 113
- PATENT ABSTRACTS OF JAPAN vol. 007, no. 107 (E-174), 11 May 1983 (1983-05-11) & JP 58 030074 A (HITACHI SEISAKUSHO KK), 22 February 1983 (1983-02-22)

## Description

This invention relates to high performance fuel cells and, more specifically, to optimized flow field and channel designs for promoting uniform performance and improved efficiency of the fuel cell system.

Fuel cells convert reactants, namely fuel and oxidants, to generate electric power and reaction products. Fuel cells generally employ an electrolyte disposed between two electrodes, namely a cathode and an anode. Preferred fuel cell types include solid oxide fuel cells (SOFCs) that comprise a solid oxide electrolyte and operate at relatively high temperatures. Generally, the SOFC employs an oxygen-ion conductor (such as stabilized zirconia, doped ceria, and doped lanthanum gallate) or proton conductors (such as doped perovskite Ba(Sr)CeO₃, Ba(Sr)ZrO₃, and mixed perovskites A₃(B'B")O₉) as the electrolyte. Currently, SOFCs use almost exclusively oxygen-ion conducting yttria-stabilized zirconia (YSZ) as the electrolyte.

During normal operation of a solid oxide fuel cell with an oxygen-ion electrolyte, oxygen in oxidants is electrochemically reduced at the cathode, typically resulting in the generation of oxygen-ions and electrons. The oxygen-ions are conducted from the reaction sites through the electrolyte, to electrochemically react with the fuel at the anode to form H₂O, CO₂ and possibly other species depending on the fuel employed.

Flow field uniformity is a critical issue for high performance fuel cells. Adequate anode and cathode flows must reach over the entire electrode surfaces in a cell. Flow field design should therefore insure that the flow over a cell plate is as uniform as possible, and provide the flexibility to increase or decrease the flow pressure drop in the cell. Typically, a manifold design in a fuel cell stack determines the required pressure drop in the cell based on the number of cells in the stack.

Uniform current density across a fuel cell is also required to optimize fuel cell performance. Uniform current density eliminates undesired temperature gradients in the cell. Current density is also directly related to the partial pressure of the active fuel (such as hydrogen) and oxygen in the anode and cathode flows, respectively. Along a fuel cell from reactant inlet to outlet, partial pressures of active reactants are reduced as reactions take place and as the reactants are consumed. The reduction in partial pressures can be drastic, causing the Nernst potential across the cell to drop and the reaction rate at the electrodes to decrease significantly along the flow, resulting in an uneven current density across the fuel cell.

Representative fuel cell designs including flow channel and flow field configurations may be found in, for example, U.S. Patent Nos. 6,586,128; 6,099,984; 6,093,502; 5,840,438; 5,686,199; and 4,988,583.

EP0924785 A, US2004038113 A1, JP58030074 A, WO02069426 disclose gas flow field designs formed by differently shaped projections on a flat substrate, protruding into the flow channels.

This invention seeks to improve overall fuel cell performance by new flow field and flow channel designs. To this end, the invention addresses two requirements of the fuel cell flow field: 1) uniform flow resistance to enhance flow uniformity in the cell; and 2) flexibility to increase or decrease the flow pressure drop in the cell.

The invention also addresses flow field plate channel designs that permit increase in the flow velocity to help alleviate the reduction rate in the partial pressures of active reactants along the flow, and consequently enhance the uniformity of the cell current density and performance.

According to the present invention there is provided a flow field forming one wall of a channel in a flow field plate of a solid oxide fuel cell, the flow field comprising a flat substrate having a patterned array of differently-shaped flow barriers projecting from the substrate into the channel in which the flat substrate is incorporated in a flow channel that decreases in cross sectional area in a flow direction.

In the exemplary embodiments of the invention, a series of alternative flow fields are disclosed that have been designed to enhance and thus increase fuel utilization in the fuel cell system. In these flow field designs, stamped or machined flow fields are formed with a plurality of dimples or protrusions in selected patterns that serve as flow barriers and thus provide uniform flow resistance along tile various paths of flow.

In one embodiment of the invention, fuel flow is introduced to the flow field from an opening at the center of one side of the fuel cell. A "center aisle" is arranged in the direction of flow through the opening, and is comprised of two rows of flow barriers that allow the flow to turn to both sides of the center aisle. The center aisle's width may vary (i.e., decrease) along the direction of flow since the amount of flow is progressively smaller as flow reaches the opposite side of the fuel cell. The flow field on each side of the center aisle comprises several rows of flow barriers (i.e., dimples) of circular or elliptical shapes. These barriers may be aligned or staggered, the latter providing better mixing of the flow which enhances the diffusion of fuel into the electrodes and thus promotes better cell performance. As mentioned above, the flow is free to turn in opposite directions from the center aisle, and the flow exits the cell through a series of small holes in two opposite ends of the cell. The diameter of these holes may vary along the sides to provide more or less flow resistance and consequently, provide adequate overall flow resistance to ensure flow uniformity. In a variation of the above described flow field design, flow exits from only one end of the fuel cell.

In another exemplary embodiment of the invention, the anode or cathode flow enters one end of the fuel cell and exits at the opposite end of the fuel cell, with opposite sides of the cell blocked. The flow barriers along the direction of flow may be in-line or staggered as described above. The flow exits the opposite side of the cell through a series of small holes as also described above.

In still another embodiment of the invention, the cathode or anode flow is introduced to the flow field through a first manifold at one end of the cell, and in a variation of that design, the flow out of the cell is collected via a second manifold at the opposite end of the cell.

With respect to the design of the fuel cell flow channels (the flow fields described above are formed on one surface of the otherwise tubular channel), the channel height or width may be reduced gradually in the direction of flow to thereby increase the flow velocity downstream. In one embodiment, variable width channels are incorporated in a serpentine flow.

The invention will now be described in greater detail, by way of example, with reference to the drawings, in which:-
FIGURE 1 is a schematic diagram of a typical fuel cell;
FIGURE 2 is a schematic diagram of a fuel cell incorporating a flow field design in accordance with an exemplary embodiment of the invention;
FIGURE 3 is a schematic diagram of a flow field design in accordance with an alternative embodiment of the invention;
FIGURE 4 is a schematic diagram of a flow field design in accordance with a third exemplary embodiment of the invention;
FIGURE 5 is a schematic diagram of a flow field design in accordance with a fourth exemplary embodiment of the invention;
FIGURE 6 is a schematic diagram of a flow field design in accordance with a fifth exemplary embodiment of the invention;
FIGURE 7 is a schematic diagram of a known fuel cell design incorporating uniform cross section flow channels;
FIGURE 8 is a schematic diagram showing a fuel cell with variable cross section flow channels in accordance with an exemplary embodiment of this invention;
FIGURE 9 is a schematic diagram of a tubular fuel cell with variable cross section flow channels in accordance with another exemplary embodiment of the invention;
FIGURE 10 is a variation of the tubular fuel cell shown in Figure 9;
FIGURE 11 is a schematic diagram of a flow channel where the channel width is reduced gradually along the flow direction in accordance with another exemplary embodiment of the invention; and
FIGURE 12 is a schematic diagram of a serpentine flow field that incorporates variable width channels in accordance with another exemplary embodiment of the invention.

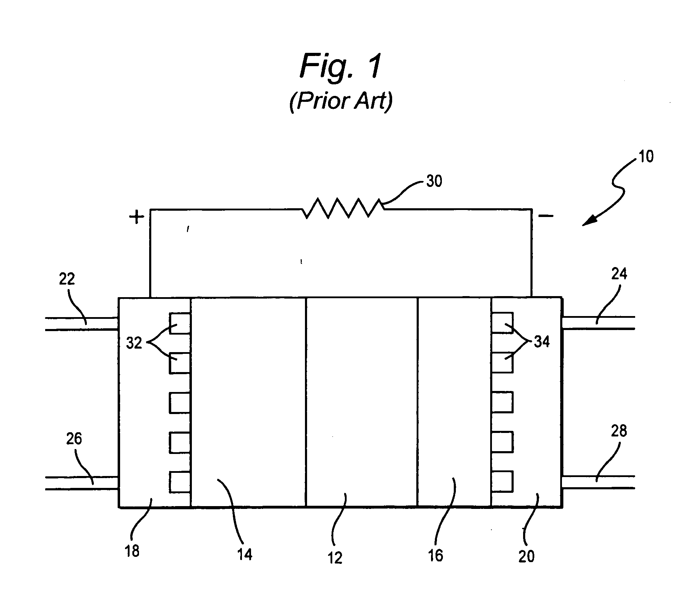

A schematic diagram of a typical solid oxide fuel cell stack is depicted in Figure 1. For simplicity, however, Figure 1 shows only one cell in the stack. The cell 10 comprises an electrolyte-electrode assembly that includes a solid oxide electrolyte 12 sandwiched between a cathode 14 and an anode 16. During operation, oxidant (typically air) and fuel (typically hydrogen) are supplied to flow field plates 18, 20 respectively at inlets 22, 24. The oxidant and fuel streams exhaust from stack 10 at outlets 26, 28. During operation, power is delivered to a load depicted as resistor 30.

Flow fields are incorporated into distribution or flow channels 32, 34 that are formed in the flow field plates 18, 20 for delivery of reactants directly to surfaces of cathode and anode in the outflow direction.

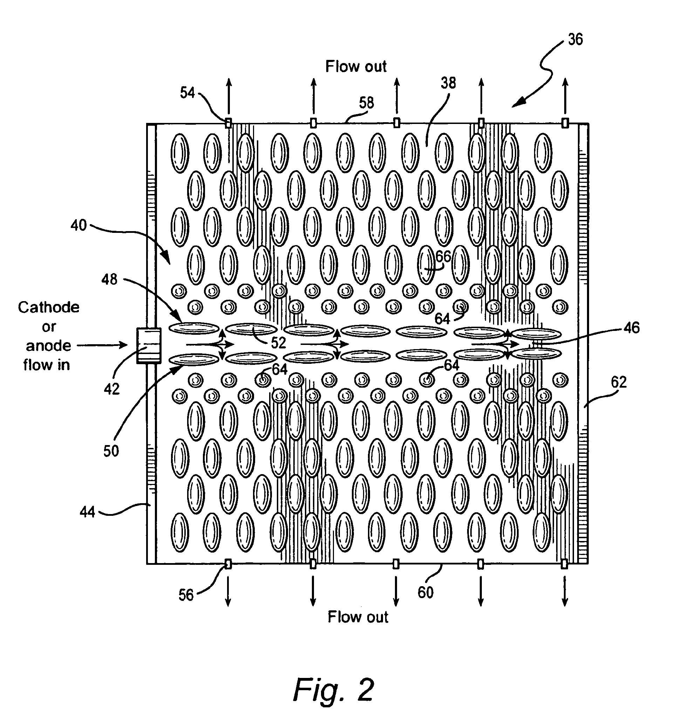

Referring to Figure 2, a flow field design for a fuel cell flow channel 36 formed in a flow field plate 18 or 20 is illustrated in schematic form. The flow field 38 includes a flat substrate 40 embossed or otherwise suitably formed to include a plurality of flow barriers in the channel, opposite the cathode or anode. Generally, air or fuel flow (or simply, flow) is introduced to the channel 36 from an opening or inlet 42 at the center of side 44 of the channel. A "center aisle" 46 is formed or defined in the flow field plate 38 by a pair of rows 48, 50 of spaced, elliptically-shaped flow dimples or barriers 52 that protrude into the channel or flow path. The center (or flow) aisle may have a uniform or varied width along the flow direction. The spaces between the barriers 52 in the two center rows 48, 50 allow the flow to turn substantially 90° to both sides of the center aisle. The flow snakes through the spaces between dimples 64 and ellipses 66 and exits through a plurality of outlets in the form of small holes 54, 56 provided, respectively, along opposite ends 58, 60 of the flow channel. Outlets 54, 56 may have the same or varied opening size. Side 62 is closed, and side 44 is closed except for the presence of inlet 42. Thus, all flow is directed out of the opposite ends of the channel 36, in directions that are transverse to the direction of flow at the inlet 42.

The flow field on each side of the center aisle 46 is made up of several rows of flow barriers 64, 66 of circular and elliptical shape, respectively. The flow barriers or dimples 64 that lie adjacent the center aisle 46 are rounded in shape and are staggered in the outflow direction. Larger, elliptical flow barriers (or ellipses) 66 have their major axes oriented parallel to the outflow direction and are also staggered in the outflow direction. Staggered barriers provide better mixing of the flow, which in turn, enhances the flow diffusion into the electrodes and promotes better fuel cell performance. The shape and pattern of the barriers as shown in Figure 2 is exemplary only and may be altered to suit requirements.

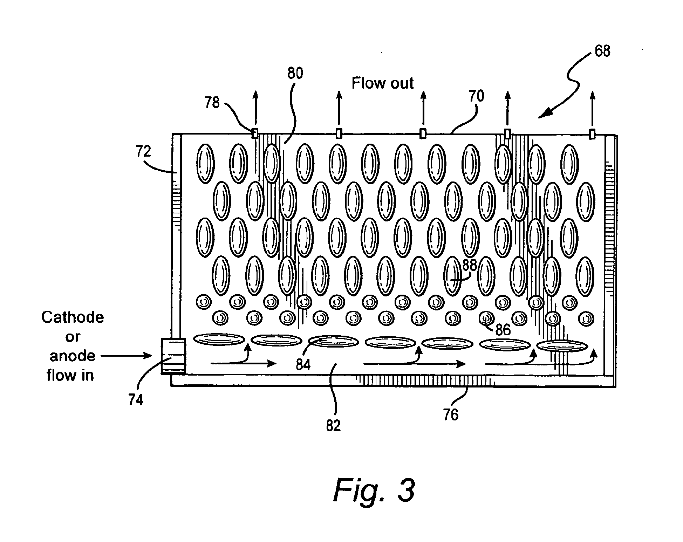

Figure 3 illustrates an alternative flow field design similar to the design in Figure 2 but where the channel 68 is essentially configured as half the channel 36. Thus, flow is permitted to exit from only one end 70 of the channel. The flow enters the channel side 72 via inlet 74 and along a now-closed end 76. The flow is directed along the end 76 but is permitted to turn and flow in a transverse direction, toward end 70 where the flow exits through a plurality of outlets (small holes) 78. The flow field barriers are formed in the substrate 80 in a manner similar to the earlier described embodiment in that an inlet aisle 82 is formed by end 76 in combination with spaced elliptical flow barriers 84. Staggered rows of circular and elliptical dimples 86, 88, respectively, define a plurality of flow paths in a transverse or outflow direction, from the aisle 82 to the outlet holes 78.

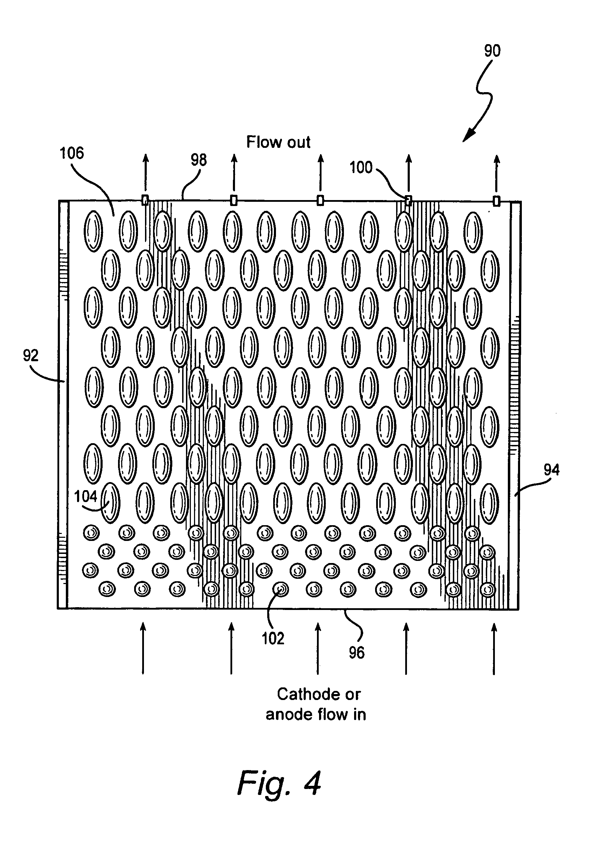

In another embodiment illustrated in Figure 4, the flow channel 90 is designed to have a substantially straight flow field. Sides 92 and 94 are closed while end 96 is open to inlet flow. Opposed end 98 is closed except for the plurality of holes or outlets 100. Between ends 96, 98, there are staggered rows of round and elliptical flow barriers 102, 104, respectively, formed in the substrate 106. Note that the smaller round flow barriers 102 are closest to the inlet while the larger elliptical flow barriers 104 are downstream of the inlet with major axes arranged parallel to the flow direction.

The diameter of the holes 100, as well as holes 54 in Figure 2 and 78 in Figure 3, may vary to provide more or less flow resistance and, consequently, provide adequate overall flow resistance that ensures flow uniformity. The size, configuration and density of the flow barriers 102 and 104, as well as barriers 52, 64 and 66 in Figure 2 and 84, 86 and 88 in Figure 3, may also vary to provide the desired uniform flow for a given flow rate and required fuel cell power.

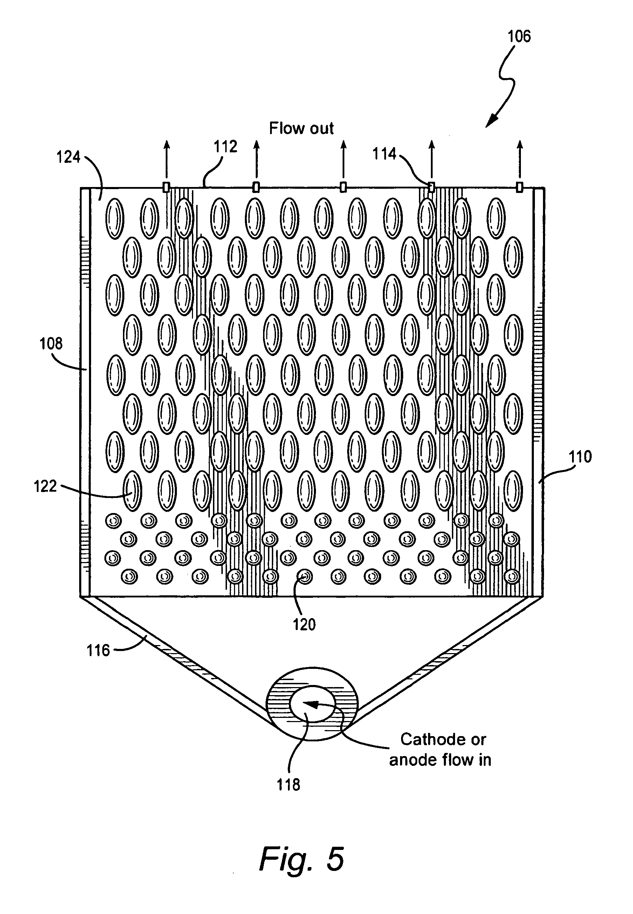

Figure 5 illustrates yet another channel and flow field design that is similar to the channel 90 in Figure 4, but where the cathode or anode flow is introduced through a manifold. Thus, channel 106 includes closed sides 108, 110 and one end 112 closed except for the plurality of outlet holes 114. The inlet 116, however, is formed by a generally inverted cone-shaped wall with a centered inlet manifold 118 introducing the anode or cathode flow into the flow field. The latter is made up of relatively smaller, round flow barriers 120 and relatively larger elliptically-shaped flow barriers 122 formed in the substrate 124 and arranged substantially identically to the flow field in Figure 4, i.e., in staggered rows in the direction of flow.

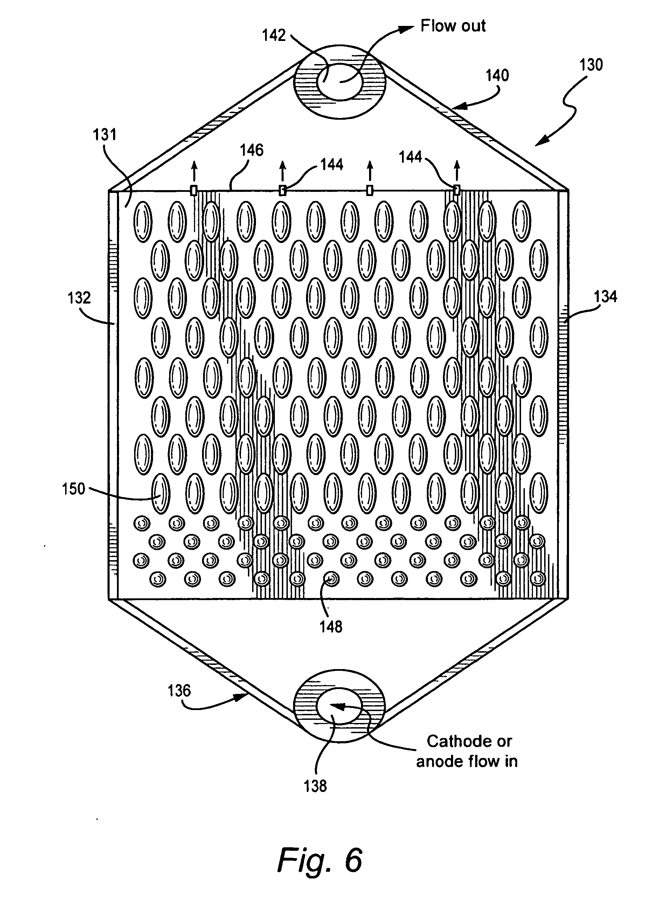

In Figure 6, the channel 130 and flow field design formed in the substrate 131 is similar to the channel 112 in Figure 5 but in this case, flow is both introduced and collected by manifolds. Specifically, the channel 130 includes closed sides 132, 134 and an inlet 136 formed by a generally inverted cone-shaped end wall with a centered inlet manifold 138 for introducing the anode or cathode flow into the channel. The outlet 140 is formed by a similar, cone-shaped end wall with a centered outlet manifold 142. Outlets 144 in an internal channel end wall 146 feed the outlet flow to the manifold. This configuration is desirable when the cathode or anode flow is reclaimed at the channel exit. The flow barriers 148, 150 are otherwise substantially identical in both shape and pattern to the barriers 120, 122 in Figure 5.

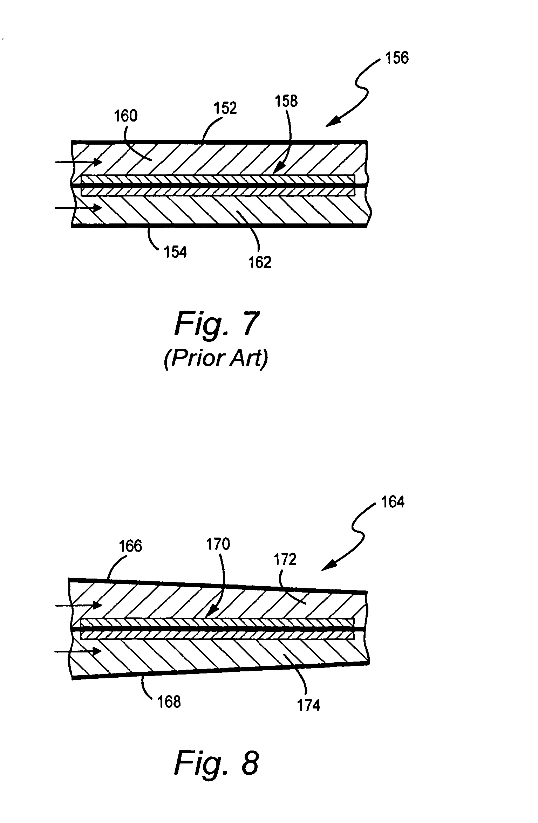

With reference now to Figures 7-10, a second feature of the invention relates to the configuration of the channels in the flow field plates, and specifically, to the gradual reduction in channel cross section designed to promote uniform performance over the entire cell. By increasing the flow velocity to thereby help alleviate the reduction rate in the partial pressures along the flow and consequently, enhance the uniformity of the cell current density. In Figure 7, a known flow channel configuration is illustrated where the walls 152 and 154 of the channel 156 in combination with an anode/electrolyte/cathode assembly 158, establish uniform cross section flow paths 160, 162 for the respective anode and cathode flows.

In Figure 8, the flow channel 164 in accordance with an exemplary embodiment of this invention, includes a pair of walls or sides 166 and 168 on either side of a centrally-located anode/electrolyte/cathode assembly 170. Tapering at least two opposite walls of the channel in the flow direction results in flow paths 172 and 174 for the respective anode and cathode flows that reduce gradually in cross section, and thus increase the flow velocity in a downstream or flow direction. The flow field arrangements of Figures 2-6 may be incorporated into the channel 156, with the flow barriers formed on the internal side of walls 166, 168.

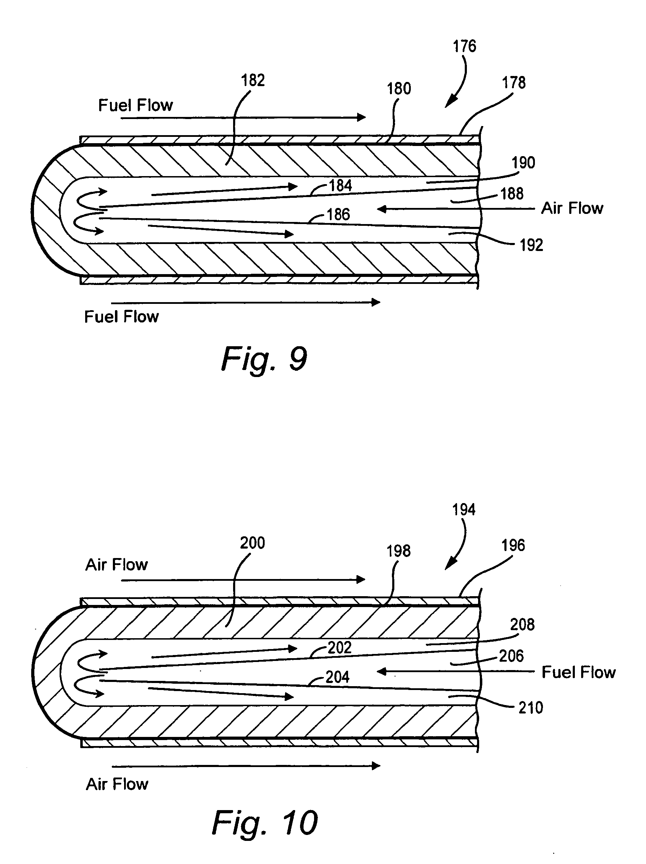

In Figure 9, another exemplary embodiment of the invention relates to the channel configuration in a tubular fuel cell 176. In this embodiment, the anode 178, electrolyte 180 and cathode 182 are formed in a C-shaped configuration, with internal flow walls 184, 186 defining an air inlet passage 188 and a pair of outlet passages 190, 192. The walls 184, 186 are sloped to decrease the outlet area passages in the direction of flow. The decrease in cross-sectional area increases flow velocity in the downstream direction. The above-described flow field barrier designs may be provided on the sides of walls 184, 186 facing the adjacent cathode.

In Figure 10, a channel 194 is shown that is similar to channel 176 in Figure 9, but reversed in the sense that the cathode 196, electrolyte 198 and anode 200 are arranged with internal walls 202, 204 such that air flows across the cathode and fuel flows internally through inlet passage 206 and outlet passages 208, 210, the latter decreasing in cross-sectional area in the flow direction. Here again, flow field plate designs may be formed on surfaces of walls 202, 204 facing the anode.

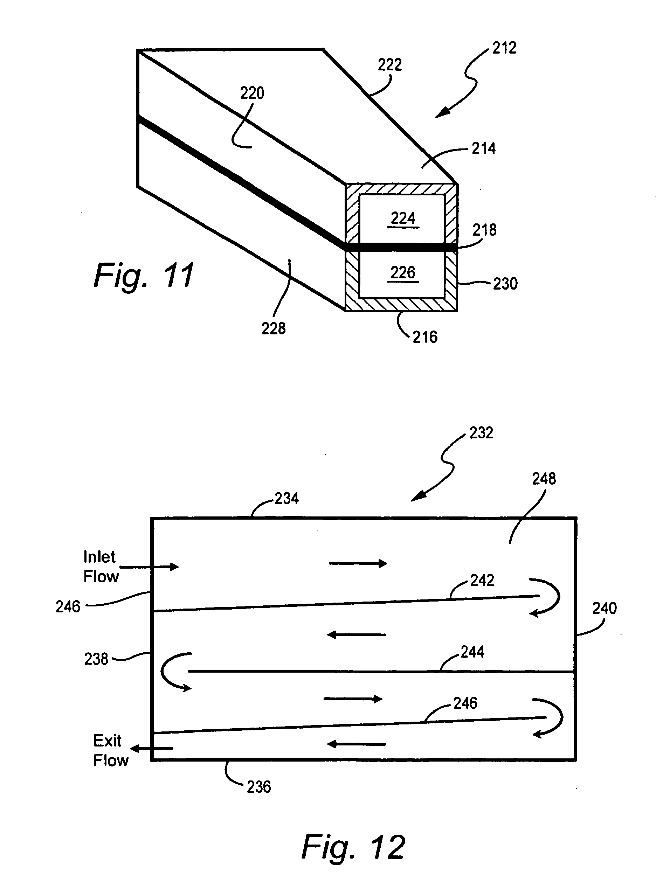

In Figure 11, a cell 212 is illustrated that is reduced gradually in width to thereby also increase flow velocity in a downstream direction. Specifically, the cell 212 includes an anode flow path 224 (formed with sides 220, 222 and top 214) and a cathode flow path 226 (formed with sides 228, 230, and bottom 216) vertically stacked about an anode/electrolyte/cathode assembly 218. The top 214 and bottom 216 are gradually reduced in width in the direction of flow so that the flow velocity in channels 224 and 226 is increased in the downstream direction and toward a smaller area of the cell. Therefore, the fuel cell performance is expected to be higher than in a constant width channel. Flow field designs as described in connection with Figures 1-6 may be formed on the interior surfaces 214 and 216 facing the anode and cathode, respectively.

Figure 12 illustrates yet another exemplary embodiment of the invention. In this case, however, the channel 232 is comprised of parallel sides 234, 236 as well as parallel ends 238, 240, and the internal walls 242, 244 and 246 are sloped relative to adjacent sides 234, 236. The internal walls thus create a serpentine flow path with an inlet 246 in the upper portion of side 238. Each section of the serpentine flow path decreases in cross section in the flow direction from one end of the cell to the other. This serpentine flow path may include flow barriers such as dimples or protrusions on the flat substrate 248. With increased flow velocity at downstream direction, the fuel cell performance is expected to be enhanced.

## Claims

1. A flow field (38) forming one wall of a channel (36) in a flow field plate (18) of a solid oxide fuel cell (10), the flow field comprising a flat substrate (40) having a patterned array of differently-shaped flow barriers (52, 64, 66) projecting from the substrate into the channel **characterised in that** said flat substrate is incorporated in a flow channel that decreases in cross sectional area in a flow direction.

2. The flow field of claim 1 wherein said differently-shaped flow barriers include round and elliptical flow barriers (52, 64, 66).

3. The flow field of claim 2 wherein at least some of said elliptical flow barriers (52) are arranged with major axes parallel to a direction of flow across the plate.

4. The flow field of claim 3 wherein said round and elliptical flow barriers (64, 66) are arranged in staggered rows in said direction of flow.

5. The flow field of claim 1 wherein said flow channel is formed with an inlet (42) centered along a side (44) of said channel, and a plurality of outlets (54) along at least one end (58) of said channel.

6. The flow field of claim 5 wherein said flow channel is formed with a plurality of outlets (54) along said at least one end (58) and an opposite end (60) of said channel.

7. The flow field of claim 5 wherein said outlets (54) have the same or varied opening size.

8. The flow field of claim 5 wherein a flow aisle (82) is defined in said flow channel adjacent and parallel to an opposite end (76) of said flow channel, said flow aisle defined in part by a first group of said flow barriers (84), spaced from each other so as to permit flow to change direction toward said plurality of outlets.

9. The flow field of claim 8 wherein said flow aisle (46, 82) width is the same or varied along the direction of flow.

10. The flow field of claim 8 wherein said first group of said flow barriers (84) is elliptical in shape, with major axes arranged parallel to said flow aisle (82).

## Patentansprüche

1. Strömungsfeld (38), das eine Wand eines Kanals (36) in einer Strömungsfeldplatte (18) einer Festkörperoxid-Brennstoffzelle (10) ausbildet, wobei das Strömungsfeld ein ebenes Substrat (40) mit einer strukturierten Anordnung unterschiedlich geformter Strömungsbarrieren (52, 64, 66) aufweist, die aus dem Substrat in den Kanal vorstehen, **dadurch gekennzeichnet, dass** das ebene Substrat in einen Strömungskanal eingebaut ist, der in der Querschnittsfläche in einer Strömungsrichtung abnimmt.

2. Strömungsfeld nach Anspruch 1, wobei die unterschiedlich geformten Strömungsbarrieren runde und elliptische Strömungsbarrieren (52, 64, 66) beinhalten.

3. Strömungsfeld nach Anspruch 2, wobei wenigstens einige von den elliptischen Strömungsbarrieren (52) mit den Hauptachsen parallel zu einer Strömungsrichtung über die Platte angeordnet sind.

4. Strömungsfeld nach Anspruch 3, wobei die runden und elliptischen Strömungsbarrieren (64, 66) in gestaffelten Reihen in der Strömungsrichtung angeordnet sind.

5. Strömungsfeld nach Anspruch 1, wobei der Strömungskanal mit einem entlang einer Seite (44) des Kanals zentrierten Einlass (42) und mit mehreren Auslässen (54) entlang einem Ende (58) des Kanals ausgebildet ist.

6. Strömungsfeld nach Anspruch 5, wobei der Strömungskanal mit mehreren Auslässen (54) entlang dem wenigstens einem Ende (58) und einem gegenüberliegenden Ende (60) des Kanals ausgebildet ist.

7. Strömungsfeld nach Anspruch 5, wobei die Auslässe (54) dieselbe oder eine veränderte Öffnungsgröße haben.

8. Strömungsfeld nach Anspruch 5, wobei ein Strömungsdurchlass (82) in dem Strömungskanal angrenzend und parallel zu einem gegenüberliegenden Ende (76) des Strömungskanals definiert ist, wobei der Strömungsdurchlass teilweise durch eine erste Gruppe der Strömungsbarrieren (84) definiert ist, die voneinander in Abstand angeordnet sind, um somit eine Strömungsrichtungsänderung zu den mehreren Auslässen hin zu ermöglichen.

9. Strömungsfeld nach Anspruch 8, wobei die Breite des Strömungsdurchlasses (46, 82) entlang der Strömungsrichtung dieselbe oder verändert ist.

10. Strömungsfeld nach Anspruch 8, wobei die erste Gruppe der Strömungsbarrieren (84) eine elliptische Form hat, wobei die Hauptachsen parallel zu dem Strömungsdurchlass (82) ausgerichtet sind.

## Revendications

1. Champ d'écoulement (38) formant une paroi d'un canal (36) dans une plaque (18) de champ d'écoulement d'une pile à combustible (10) à oxyde solide, le champ d'écoulement comportant un substrat plat (40) pourvu d'une combinaison structurée de barrières d'écoulement de différentes formes (52, 64, 66), lesquelles font saillie depuis le substrat jusque dans le canal, **caractérisé en ce que** ledit substrat plat a une section transversale de dimensions diminuant dans un sens d'écoulement.

2. Champ d'écoulement selon la revendication 1, dans lequel lesdites barrières d'écoulement de différentes formes comprennent des barrières d'écoulement rondes et elliptiques (52, 64, 66).

3. Champ d'écoulement selon la revendication 2, dans lequel au moins certaines desdites barrières d'écoulement elliptiques (52) sont disposées avec leur grand axe parallèle à un sens d'écoulement d'un côté à l'autre de la plaque.

4. Champ d'écoulement selon la revendication 3, dans lequel lesdites barrières d'écoulement rondes et elliptiques (64, 66) sont disposées en rangées en quinconce dans ledit sens d'écoulement.

5. Champ d'écoulement selon la revendication 1, dans lequel ledit canal d'écoulement est pourvu d'une entrée (42) centrée le long d'un côté (44) dudit canal, et d'une pluralité de sorties (54) le long d'au moins une extrémité (58) dudit canal.

6. Champ d'écoulement selon la revendication 5, dans lequel ledit canal d'écoulement est pourvu d'une pluralité de sorties (54) le long de ladite au moins une extrémité (58) et d'une extrémité opposée (60) dudit canal.

7. Champ d'écoulement selon la revendication 5, dans lequel lesdites sorties (54) ont des dimensions d'ouvertures immuables ou changeantes.

8. Champ d'écoulement selon la revendication 5, dans lequel une voie d'écoulement (82) est définie dans ledit canal d'écoulement et parallèlement à une extrémité opposée (76) dudit canal d'écoulement, ladite voie d'écoulement étant définie en partie par un premier groupe desdites barrières d'écoulement (84), espacées les unes des autres afin de permettre à l'écoulement de changer de direction et de se diriger vers ladite pluralité de sorties.

9. Champ d'écoulement selon la revendication 8, dans lequel la largeur de ladite voie d'écoulement (46, 82) est immuable ou changeante dans le sens d'écoulement.

10. Champ d'écoulement selon la revendication 8, dans lequel lesdites barrières d'écoulement (84) dudit premier groupe ont une forme elliptique, leur grand axe étant parallèle à ladite voie d'écoulement (82).
